# EUROPEAN PATENT APPLICATION

(11) **EP 4 488 887 A1**
(43) Date of publication of application: **08.01.2025**
(21) Application number: 23766003.0
(22) Date of filing: 07.03.2023
(51) Int. Cl.: G06N 5/04

(54) **DATA PROCESSING METHOD IN COMMUNICATION NETWORK, AND NETWORK-SIDE DEVICE**

(30) Priority: 07.03.2022 CN 202210224517; 09.08.2022 CN 202210950629
(71) Applicant: VIVO MOBILE COMMUNICATION CO., LTD., Dongguan, Guangdong 523863 (CN)
(72) Inventor: CHENG, Sihan, Dongguan, Guangdong 523863 (CN); CHONG, Weiwei, Dongguan, Guangdong 523863 (CN); WU, Xiaobo, Dongguan, Guangdong 523863 (CN)
(74) Representative: Murgitroyd & Company
(86) International application number: PCT/CN2023/080109
(87) International publication number: WO 2023/169425

(57) **Abstract**

Disclosed are a method for processing data in a communication network, and a network side device, which belong to the technical field of communication. The method for processing data in a communication network according to an embodiment of the disclosure includes: determining, by a first network element, a first accuracy of a first model, where the first accuracy is used for indicating accuracy of the first model in practical inference; and re-training the first model or re-selecting a second model, by the first network element, in a case that the first accuracy meets a preset condition.

## Description

### CROSS-REFERENCE TO RELATED APPLICATION

The disclosure claims the priority to Chinese Patent Application No. 202210224517.3, filed with the Chinese Patent Office on March 07, 2022 and entitled "METHOD FOR PROCESSING DATA IN COMMUNICATION NETWORK, AND NETWORK SIDE DEVICE" and Chinese Patent Application No. 202210950629.7, filed with the Chinese Patent Office on August 09, 2022 and entitled "METHOD FOR PROCESSING DATA IN COMMUNICATION NETWORK, AND NETWORK SIDE DEVICE", which are incorporated herein by reference in their entireties.

### TECHNICAL FIELD

The disclosure belongs to the technical field of communication, and particularly relates to a method for processing data in a communication network, and a network side device.

### BACKGROUND

In general, some network elements can be introduced into a communication network to perform intelligent model training, execute inference task based on a trained model and obtain inference output. With the assistance of the inference output, an in-network device and an out-of-network device can make policy decisions, with a higher degree of intelligence.

However, in practical application, an accuracy achieved by the trained model does not indicate an achievable accuracy of the model in practical inference use. In other words, when the inference task is executed based on the model, an accuracy of inference output may be lower than that in a model training phase. In this case, an incorrect policy decision will be made or an inappropriate operation will be executed if the inference output is offered to the in-network device and the out-of-network device.

### SUMMARY

A method for processing data in a communication network, and a network side device are provided in embodiments of the disclosure, so as to solve the problem that a policy decision is affected by a low accuracy of a model in practical inference.

In a first aspect, a method for processing data in a communication network is provided. The method includes:
determining, by a first network element, a first accuracy of a first model, where the first accuracy is used for indicating accuracy of the first model in practical inference; and
re-training the first model or re-selecting a second model, by the first network element, in a case that the first accuracy meets a preset condition.

In a second aspect, an apparatus for processing data in a communication network is provided. The apparatus includes:
a determination module, where the determination module is configured to determine a first accuracy of a first model, and the first accuracy is used for indicating accuracy of the first model in practical inference; and
a model training module, where the model training module is configured to re-train the first model or re-select a second model in a case that the first accuracy meets a preset condition.

In a third aspect, a method for processing data in a communication network is provided. The method includes:
executing, by a second network element, an inference task based on a first model, where the first model is trained by a first network element, and the first network element includes a model training function network element; and
transmitting at least one of use information of the first model and first data to the first network element, and/or transmitting first instruction information to a seventh network element, where the first instruction information is used for instructing the seventh network element to store the first data of the inference task, and the seventh network element includes a data storage function network element.

In a fourth aspect, an apparatus for processing data in a communication network is provided. The apparatus includes:
a task execution module, where the task execution module is configured to execute an inference task based on a first model, the first model is trained by a first network element, and the first network element includes a model training function network element; and
a transmission module, where the transmission module is configured to transmit at least one of use information of the first model and first data to the first network element, and/or transmit first instruction information to a seventh network element, where the first instruction information is used for instructing the seventh network element to store the first data of the inference task, and the seventh network element includes a data storage function network element.

In a fifth aspect, a network side device is provided. The terminal includes a processor and a memory, where a program or instruction executable on the processor is stored in the memory, and when the program or instruction is executed by the processor, steps of the method in the first aspect are implemented.

In a sixth aspect, a network side device is provided. The network side device includes a processor and a communication interface, where the processor is configured to determine a first accuracy of a first model, where the first accuracy is used for indicating accuracy of the first model in practical inference; and re-train the first model or re-select a second model in a case that the first accuracy meets a preset condition.

In a seventh aspect, a network side device is provided. The network side device includes a processor and a memory, where a program or instruction executable on the processor is stored in the memory, and when the program or instruction is executed by the processor, steps of the method in the third aspect are implemented.

In an eighth aspect, a network side device is provided. The network side device includes a processor and a communication interface, where the processor is configured to execute an inference task based on a first model, the first model is trained by a first network element, and the first network element includes a model training function network element; and the communication interface is configured to transmit at least one of use information of the first model and first data to the first network element, and/or transmit first instruction information to a seventh network element, where the first instruction information is used for instructing the seventh network element to store the first data of the inference task, and the seventh network element includes a data storage function network element.

In a ninth aspect, a system for processing data in a communication network is provided. The system includes: a first network side device and a second network side device, where the first network side device may be configured to execute steps of the method in the first aspect, and the second network side device may be configured to execute steps of the method in the third aspect.

In a tenth aspect, a readable storage medium is provided. The readable storage medium stores a program or instruction, where when the program or instruction is executed by a processor, steps of the method in the first aspect or steps of the method in the third aspect are implemented.

In an eleventh aspect, a chip is provided. The chip includes a processor and a communication interface, where the communication interface is coupled to the processor, and the processor is configured to run a program or instruction, so as to implement the method in the first aspect or the method in the third aspect.

In a twelfth aspect, a computer program/program product is provided. The computer program/program product is stored in a storage medium, and when executed by at least one processor, the computer program/program product implements steps of the method in the first aspect or steps of the method in the third aspect.

In the embodiment of the disclosure, the first accuracy of the first model in practical inference may be determined, and the first model may be re-trained in a case that the first accuracy does not meet the preset condition. Therefore, when the accuracy of the first model in practical inference decreases, the accuracy of the first model may be adjusted by re-training the first model or re-selecting the second model. Accordingly, the accuracy of the first model in practical inference is improved, which may better assist an in-network device and an out-of-network device in making a correct policy decision or executing an appropriate behavioral operation.

### BRIEF DESCRIPTION OF THE DRAWINGS

Fig. 1 is a schematic diagram of a radio communication system according to an embodiment of the disclosure;
Fig. 2 is a schematic flowchart of a method for processing data in a communication network according to an embodiment of the disclosure;
Fig. 3 is a schematic flowchart of a method for processing data in a communication network according to an embodiment of the disclosure;
Fig. 4 is a schematic flowchart of a method for processing data in a communication network according to an embodiment of the disclosure;
Fig. 5 is a schematic structural diagram of an apparatus for processing data in a communication network according to an embodiment of the disclosure;
Fig. 6 is a schematic structural diagram of an apparatus for processing data in a communication network according to an embodiment of the disclosure;
Fig. 7 is a schematic structural diagram of a communication device according to an embodiment of the disclosure; and
Fig. 8 is a schematic structural diagram of a network side device according to an embodiment of the disclosure.

### DETAILED DESCRIPTION

The technical solutions in embodiments of the disclosure are clearly described below with reference to the accompanying drawings in the embodiments of the disclosure. Apparently, the embodiments described are merely some embodiments rather than all embodiments of the disclosure. All other embodiments derived by those of ordinary skill in the art based on the embodiments of the disclosure fall within the scope of protection of the disclosure.

The terms "first", "second", etc. in the description and claims of the disclosure are used to distinguish between similar objects, instead of describing a specific sequence or successive order. It should be understood that the terms used in this way are interchangeable where appropriate, so that the embodiments of the disclosure can be implemented in an order different from those shown or described herein. Moreover, the objects distinguished by "first" and "second" are usually of one type, and a number of the objects is not limited. For example, a first object can indicate one or more objects. In addition, "and/or" in the description and claims indicates at least one of objects connected. The character "/" generally indicates that objects associated are in an "or" relationship.

It should be noted that the technologies described in the embodiments of the disclosure are not limited to a long term evolution (Long Term Evolution, LTE)/LTE-advanced (LTE-advanced, LTE-A) system, and can also be used for other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency division multiple access (Single-carrier Frequency Division Multiple Access, SC-FDMA). The terms "system" and "network" in the embodiments of the disclosure are often used interchangeably. The technologies described can be applied to the systems and radio technologies mentioned above, and can also be applied to other systems and radio technologies. The following descriptions illustratively describe a 5th generation (5th Generation, 5G) system, and the 5G terms are used in most of the following descriptions. However, these technologies can also be applied to applications except for an application in the 5G system, such as a 6th generation (6th Generation, 6G) communication system.

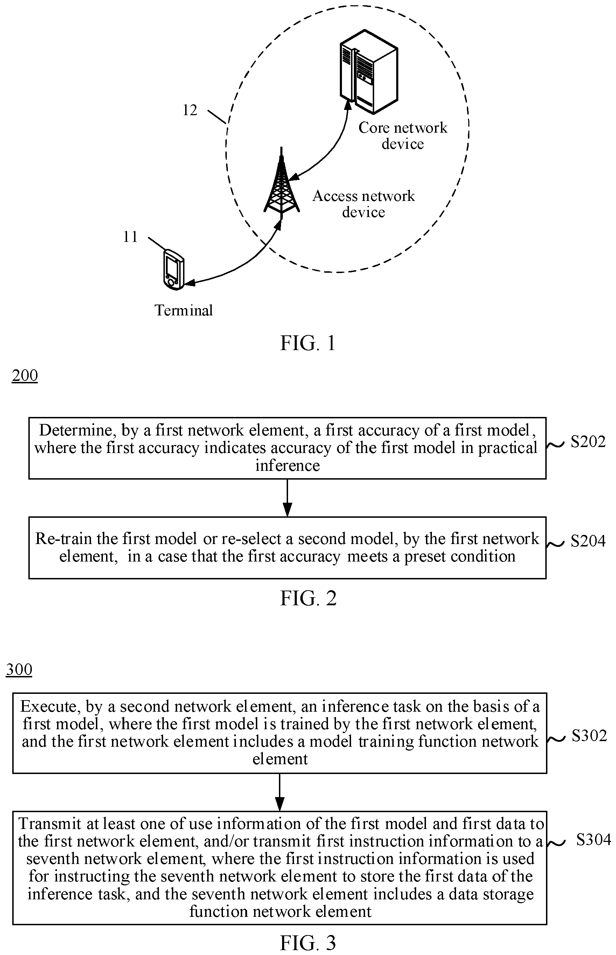

Fig. 1 is a block diagram of a radio communication system applicable to an embodiment of the disclosure. The radio communication system includes a terminal 11 and a network side device 12. The terminal 11 can be a mobile phone, a tablet personal computer (Tablet Personal Computer), a laptop computer (Laptop Computer, also referred to as a notebook computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a radio communication function, such as a refrigerator, a television, a washing machine, and furniture), a game console, a personal computer (personal computer, PC), a teller machine, a self-service machine, etc. The wearable device includes: a smart watch, a smart band, a smart headphone, smart glasses, smart jewelry (a smart wristlet, a smart hand chain, a smart ring, a smart necklace, a smart anklet, a smart ankle chain, etc.), a smart wristband, smart clothing, etc. It should be noted that a specific type of the terminal 11 is not limited in the embodiment of the disclosure. The network side device 12 can include an access network device or a core network device. The access network device 12 can also be referred to as a radio access network device, a radio access network (Radio Access Network, RAN), a radio access network function, or a radio access network unit. The access network device 12 can include a base station, a wireless local area network (Wireless Local Area Network, WLAN) access point, a WiFi node, etc. The base station can be referred to as a node B, an evolved node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or some other appropriate terms in the art. The base station is not limited to a specific technical vocabulary, as long as the same technical effect is realized. It should be noted that in the embodiment of the disclosure, only the base station in an NR system is described as an example, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), etc. It should be noted that in the embodiment of the disclosure, only a core network device in a new radio (New Radio, NR) system is described as an example, but a specific type of the core network device is not limited.

In the communication network, some network elements may be introduced to perform intelligent data analytics and generate data analytic results of some analytics. With the assistance of the data analytic results, an in-network device and an out-of-network device may make policy decisions with a higher degree of intelligence through an artificial intelligence (Artificial Intelligence, AI) method.

For example, a network data analytics function (Network Data Analytics Function, NWDAF) may perform artificial intelligence/machine learning (Artificial Intelligence/Machine learning, AI/MI,) model training based on training data, so as to obtain a corresponding model suitable for an AI task. The NWDAF performs model inference based on an AI/ML model and inference input data, so as to obtain analytics (or referred to as inference output) corresponding to a certain specific AI inference task. An in-network PCF executes an intelligent policy control and charging (Policy control and Charging, PCC) policy based on certain analytics or inference output. For example, an intelligent user-resident policy is formulated according to an analytic result of a user service behavior, so as to improve service experience of a user. Alternatively, the AMF executes an intelligent mobility management operation based on certain inference output or analytics. For example, a user is intelligently paged based on a movement trajectory analytics of the user, so as to improve a paging reachability rate.

The in-network device and the out-of-network device make correct and optimized policy decisions according to the AI analytics, on the premise that correct analytics is required. If the analytics having a low accuracy is provided, as incorrect information, for the in-network device and the out-of-network device for reference, an incorrect policy decision will be made or an inappropriate operation will be executed ultimately. Therefore, it is required to ensure the accuracy of the analytics. However, in practical application, owing to different data distribution and an insufficient generalization capacity of a model, an accuracy achieved by the trained model does not indicate an achievable accuracy of the model in practical inference use (generally, the accuracy of the model in practical inference is lower than that in a model training phase). In this way, it is likely to make the incorrect policy decision or execute the inappropriate operation.

To resolve the above technical problems, a method for processing data in a communication network and a network side device are provided in embodiments of the disclosure. When accuracy of a first model in practical inference decreases, the accuracy of the first model may be adjusted by re-training the first model or re-selecting a second model. Accordingly, the accuracy of the first model in practical inference is improved, which may better assist an in-network device and an out-of-network device in making a correct policy decision or executing an appropriate behavioral operation.

The method for processing data in a communication network and the network side device according to the embodiments of the disclosure are described in detail below with reference to the accompanying drawings through some embodiments and their application scenarios.

As shown in Fig. 2, a method 200 for processing data in a communication network is provided in an embodiment of the disclosure. The method may be executed by a first network element. The first network element may be a network side device in the embodiment shown in Fig. 1. In other words, the method may be executed by software or hardware installed in the first network element or the network side device. The method includes:

S202: The first network element determines a first accuracy of a first model, where the first accuracy indicates accuracy of the first model in practical inference.

The first network element may be a model training function network element in the communication network. The model training function network element has an AI/ML model training function, and may be configured to perform AI/MI, model training based on training data. Optionally, the first network element may be a model training logical function (Model Training Logical Function, MTLF).

The first model may be trained by the first network element. Specifically, the first network element may obtain the training data from another network element (such as a network element that may provide the training data), and perform AI/MI, training based on the training data, so as to obtain the first model. The training data include input data and label data. The label data correspond to the input data and may be data ground truths, in other words, facts and data that actually occur.

The first network element may determine the first accuracy of the first model in a case of training the first model. The first accuracy may be an accuracy in use (Accuracy in Use) of the first model. In the embodiment, the first accuracy may be used for indicating accuracy of the first model in practical inference. Specifically, the first accuracy may be used for indicating a degree of correctness and/or a degree of incorrectness of inference output in practical inference.

It should be noted that the first accuracy may have various expression forms, and may be a specific percentage, for example, 90%, a classification expression form, for example, high, medium, low, etc., or normalized data, for example, 0.9. The expression form of the first accuracy is not specifically limited herein. The first accuracy may indicate the accuracy or the degree of incorrectness of inference output of the first model for a task positively or negatively. For example, an accuracy in use of the first model may be indicated negatively by calculating an inference error or an inference error rate of the model. There are various methods for calculating an inference error or an inference error rate, for example, a mean absolute error (Mean Absolute Error, MAE), a mean square error (Mean Square Error, MSE), etc.

Optionally, as an embodiment, the step that the first network element determines a first accuracy of a first model may include:
the first network element obtains first data; and
the first network element determines the first accuracy based on the first data.

The first data include at least one of the following:
inference input data;
inference output data corresponding to the inference input data; and
label data corresponding to the inference input data.

The inference input data may be model input data generated when the inference task is executed based on the first model. The inference output data may be model output results obtained after the inference input data are inferred based on the first model. The label data may be practical result data corresponding to the inference input data.

In the embodiment, the step that the first network element obtains first data may be implemented in various manners. Optionally, in a first implementation, the step that the first network element obtains first data may include:
use information, transmitted by a second network element, of the first model is received;
source information of the first data is determined according to the use information; and
the first data are obtained according to the source information.

In a second implementation, the step that the first network element obtains first data may include:
the first data transmitted by a second network element are received.

The second network element may execute the inference task based on the first model. The second network element may be a model inference function network element in the communication network. The model inference function network element has a model inference function, and may infer the inference input data corresponding to the inference task based on the first model, so as to obtain the inference output data. Optionally, the second network element may be an analytics logical function (Analytics Logical Function, AnLF). Specifically, the second network element may be a network element that previously requested to obtain the first model from the first network element, or a network element that previously requested to obtain model information of the first model from the first network element. When receiving the first data transmitted by the second network element, the first network element may receive the first data from the network element that previously requested to obtain the first model or the model information of the first model from the first network element.

In a third implementation, the step that the first network element obtains first data may include:
the first data transmitted by a seventh network element are received, where the seventh network element includes a data storage function network element, and may be specifically an analytics data repository function (Analytics Data Repository Function, ADRF).

In the above first implementation, before receiving the use information, transmitted by the second network element, of the first model, the first network element may obtain the first model through training, and then transmit model information of the first model to a second network element. Specifically, when executing the inference based on the first model, the second network element may transmit a model request message to the first network element, where the model request message is used for requesting to obtain the first model. After receiving the model request message, the first network element may transmit the model information of the first model to the second network element if the first network element has trained the first model; and the first network element may train the first model if having not trained the first model, and transmit the model information of the first model to the second network element after the first model is trained. Alternatively, after obtaining the first model through training, the first network element may also actively transmit the model information of the first model to the second network element. When required to execute the inference task, the second network element may execute the inference task based on the first model, without transmitting the model request message to the first network element. When training the first model, the first network element may first obtain the training data from another network element (a network element that may provide the training data), and then train the first model based on the training data. The first network element may transmit the model information of the first model to the second network element through Nnwdaf_MLModelProvision_Notify or Nnwdaf_MLModelInfo_Response.

The above model information of the first model may include:
the first model;
a second accuracy of the first model, where the second accuracy indicates accuracy of a model output result presented by the first model in a training phase or a test phase.

The second accuracy may be an accuracy in training (AiT) of the first model, and may be used for indicating accuracy of in a model training phase. Specifically, the second accuracy may be used for indicating a degree of correctness and/or a degree of incorrectness of a training result in the model training phase. Optionally, the second accuracy may be equal to a value obtained by dividing a number of correctness of model decision results by a total number of decisions. In other words, second accuracy=number of correctness of decision results/total number of decisions. The correctness of decision results may indicate that the decision results are consistent with the label data, and/or that a difference between the decision results and the label data is within an allowable range. Optionally, the first network element may set a verification dataset used for evaluating the second accuracy of the model. The verification set includes input data of the model and real label data. The first network element may input the input data to be verified into a trained model, so as to obtain output data, then compare the output data with the real label data, so as to determine whether a decision result is correct, and finally obtain the second accuracy of the first model through a calculation formula of the second accuracy.

It should be noted that the second accuracy may have various expression forms, and may be a specific percentage, for example, 90%, a classification expression form, for example, high, medium, low, etc., or normalized data, for example, 0.9. The expression form of the first accuracy is not specifically limited herein. The second accuracy may indicate the accuracy or the degree of incorrectness of the first model in the model training phase positively or negatively. For example, the accuracy of the first model in the training phase may be indicated negatively by calculating a training error or a training error rate of the model. There are various methods for calculating the training error or the training error rate, which may be, for example, the MAE and the MSE.

After the first network element transmits the model information of the first model to the second network element, the second network element may execute the inference task based on the first model. Reference may be made to a specific implementation of a corresponding step in the embodiment shown in Fig. 3 for a particular implementation for the second network element executes the inference task, which will not be described in detail herein. After executing the inference task, the second network element may transmit the use information for the first model of the second network element to the first network element. The first network element may receive the use information, transmitted by the second network element, of the first model. Optionally, before receiving the use information, transmitted by the second network element, of the first model, the first network element may also transmit a first request message to the second network element, where the first request message is used for requesting to obtain the use information for the first model of the second network element. In a case of receiving the first request message, the second network element may transmit the use information for the first model of the second network element to the first network element. In other words, the second network element may actively transmit the use information for the first model of the second network element to the first network element, and alternatively, the second network element may transmit the use information to the first network element in a case of receiving the first request message from the first network element, which is not specifically limited herein. The use information for the first model of the second network element may include at least one of the following:
a model identification information of the first model;
an analytic identification information of the inference task executed based on the first model;
condition limitation information of the inference task; and
target information of the inference task.

The model ID (Model ID) may be used for indicating a model used by the second network element, and the model identification information of the first model may be used for indicating the first model. The analytic ID (analytic ID) may identify a type of the inference task, and may be used for determining a corresponding model. The analytic identification information of the inference task executed based on the first model may be used for determining the first model. The condition limitation information of the inference task (that is, analytics filter information) may be used for defining a range for executing the inference task, for example, a time range and an area range. The target information of the inference task (that is, analytics target) may be used for indicating a target for which the inference task is intended, for example, target user equipment (User Equipment, UE) (target UE, in other words, an analytic target is certain UE), or may be a network function (Network Function, NF) instance (instance).

Optionally, the use information for the first model of the second network element may also include at least one of the inference input data generated when the second network element executes the inference task based on the first model, the inference output data corresponding to the inference input data, and the label data corresponding to the inference input data. The inference input data may be collected by the second network element. For example, the second network element may collect the inference input data for inference in a case of receiving a task request for the inference task from another network element (such as a consumer network element). Alternatively, the inference input data may also be actively collected by the second network element. The inference output data may be obtained by the second network element in a process of executing the inference task based on the first model and the inference input data. The label data may be obtained by the second network element from another network element (such as a source device of the label data). For example, the second network element may transmit a data acquisition request to another network element, so as to request to obtain the label data.

After receiving the use information for the first model of the second network element, the first network element may determine the source information of the first data according to the use information. The source information of the first data includes at least one of the following:
a third network element, where the third network element is configured to provide the inference input data corresponding to the inference task; and
a fourth network element, where the fourth network element is configured to provide the label data corresponding to the inference task.

The third network element may include a source device of the inference input data. The third network element may be determined by the first network element. Specifically, the first network element may determine a target and a range involved in the inference task according to the condition limitation information of the inference task (analytics filter information) and the target information of the inference task (analytics target) in the use information. According to the target, the range, and metadata information, network elements from which the inference input data corresponding to the inference task are obtained may be specifically determined. These network elements determined are the third network elements.

The fourth network element may include the source device of the label data. The fourth network element may be determined by the first network element. Specifically, the first network element may determine, according to an output data type (data type) of the first model, an NF type (NF type) that may provide the data type correspondingly, determine a network element instance corresponding to the network function type according to the analytics target, the filter information, etc., and take the network function instance as the fourth network element. For example, if the first model is a UE mobility model (mobility model), the output data type of the first model is a UE location (location), an AMF type (type) may be determined as data information of the UE location based on the output data type, and a corresponding AMF instance queried from the UDM or the NRF according to the inference task target UE 1 and an area of interest (Area Of Interest, AOI) is an AMF 1, the AMF 1 is the fourth network element. The first network element may use the AMF 1 as a source of the label data, and obtain a true label data value of the UE location from the AMF1.

Optionally, the above source information may further include at least one of the following:
the first model corresponding to the inference task;
the input data type of the first model; and
the output data type of the first model.

The first model may be determined by the first network element according to the model identifier and/or the analytics identifier in the use information. For example, if the use information includes the analytics ID (analytics ID), and the analytics identifier and the model ID (model ID) are in a mapping relationship, for an analytics ID (for example, analytic ID=UE mobility, used for predicting a movement trajectory of a user), a corresponding model identifier may be determined as a model 1 based on the mapping relationship, and a model corresponding to the model 1 is the first model corresponding to the inference task.

The input data type (which may be referred to as the metadata information) and the output data type of the first model are related to the inference task specifically applied to the first model or result data configured for prediction. For example, if the first model is configured to predict the movement trajectory of the user, the input data type of the first model may include a UE ID, a time, a current service state of the UE, etc., and the output data type may include the UE location (for example, a tracking area (Tracking Area, TA)/cell (cell)), etc.

After determining the source information of the first data, the first network element may obtain the first data according to the source information. The step that the first network element obtains the first data according to the source information may include at least one of the following:
an input data obtaining request message is transmitted to a third network element, where the input data obtaining request message is used for requesting to obtain the inference input data; and
a label data obtaining request message is transmitted to a fourth network element, where the label data obtaining request message is used for requesting to obtain the label data.

The third network element may determine inference input data to be fed back to the first network element according to input data obtaining request message. The input data obtaining request message may include at least one of the following:
type information of the inference input data;
target information corresponding to the inference input data; and
time information corresponding to the inference input data.

The type information of the inference input data, the target information corresponding to the inference input data, and the time information corresponding to the inference input data are determined by the first network element according to the input data type in an inference process, the inference output target, and a time for the inference respectively. In other words, the first network element determines a type to be obtained of the inference input data according to the input data type in the inference process, determines a target to be obtained of the inference input data according to the inference output target, and determines time information (a time stamp, a time period, etc.) of the inference input data according to the time for the inference. If the inference process indicates statistical calculation for a past time or prediction for a future time, the time information may be a past time or a future time.

The fourth network element may determine label data to be fed back to the first network element according to the label data obtaining request message. The label data obtaining request message may include at least one of the following:
type information of the label data;
target information corresponding to the label data; and
time information corresponding to the label data.

The type information of the label data, the target information corresponding to the label data, and the time information corresponding to the label data are determined by the first network element according to the output data type in the inference process, the analytics target, and a time for the inference respectively. In other words, the first network element determines a type to be obtained of the label data according to the output data type in the inference process, determines a target to be obtained of the label data according to the analytics target, and determines the time information (a time stamp, a time period, etc.) of the label data according to the time for the inference. If the inference process indicates statistical calculation for a past time or prediction for a future time, the time information may be a past time or a future time.

For example, the MTLF (the first network element) transmits the label data obtaining request message to the AMF or the LMF (the third network element). The request information carries the label data type of the UE location, the target information of a UE ID1, and the time information of a specific time period. In this case, the request information is used for requesting the AMF/LMF to feed back a value of the UE location of the UE ID1 within the specific time period.

After receiving the input data obtaining request message, the third network element may transmit the corresponding inference input data to the first network element. In this way, the first network element may obtain the inference input data from the third network element. Similarly, after receiving the label data obtaining request message, the fourth network element may transmit the corresponding label data to the first network element, and the first network element may obtain the label data from the fourth network element. It should be noted that if the second network element executes one or more inference processes to obtain a plurality of inference output results in a process of executing the inference task, the first network element is required to correspondingly obtain a plurality of label data values corresponding to the plurality of inference output results from the fourth network element.

It should also be noted that the way for the first network element to obtain the inference input data and/or the label data is described above. The first network element may obtain the inference output data from the second network element. The second network element may obtain the inference output data after executing the inference task based on the first model. In addition, since the inference output data may be obtained through inference based on the inference input data and the first model, in a process of obtaining the inference output data, after obtaining the inference input data, the first network element may obtain the inference output data through inference based on the inference input data and the first model. In this way, the first network element is not required to obtain the inference output data from another network element, so that a data obtaining step may be simplified.

In the above second implementation, that is, in a case that the first network element obtains the first data by receiving the first data transmitted by the second network element, the first data obtained by the first network element may include at least one of the inference input data, the inference output data, and the label data. The inference input data may be collected by the second network element. For example, the second network element may collect the inference input data for inference in a case of receiving a task request for the inference task from another network element (such as a consumer network element). Alternatively, the inference input data may also be actively collected by the second network element. The inference output data may be obtained by the second network element in a process of executing the inference task based on the first model and the inference input data. The label data may be obtained by the second network element from another network element (such as the source device of the label data). For example, the second network element may obtain the label data by transmitting the data obtaining request to another network element.

Optionally, before the first network element receives the first data transmitted by the second network element, the method may further include:
the first network element transmits a second request message to the second network element, where the second request message is used for requesting to obtain the first data collected by the second network element.

In other words, when obtaining the first data, the first network element may transmit the second request message to the second network element, where the second request message is used for requesting to obtain the first data collected by the second network element. The second network element may transmit the first data to the first network element in a case of receiving the second request message.

Optionally, the second request message may be a subscription message. Optionally, the second request information includes at least one of the following:
an analytic identifier;
condition limitation information of the inference task;
target information of the inference task;
an identifier of the first model;
input data type information of the first model; and
output data type information of the first model.

Optionally, the second request information may also include a request reason. For example, the request reason may be that the first model is required to be re-trained, and alternatively, the accuracy of the first model does not meet an accuracy requirement or decreases.

In the above third implementation, that is, in a case that the first network element obtains the first data by receiving the first data transmitted by the seventh network element, the first data obtained by the first network element may include at least one of the inference input data, the inference output data, and the label data. The second network element may store the first data in the seventh network element. Specifically, after executing the inference task, the second network element may transmit first instruction information to the seventh network element, where the first instruction information is used for instructing the seventh network element to store the first data of the inference task. Optionally, the first instruction information includes at least one of the following:
an analytic identifier;
condition limitation information of the inference task;
target information of the inference task;
inference input data corresponding to the inference task;
inference output data corresponding to the inference task; and
label data corresponding to the inference task.

Reason information including that the second network element completes the inference task, the seventh network element is required to regularly store the first data, and the accuracy of the first model used when the second network element executes the inference task does not meet an accuracy requirement or decreases is stored.

The first data stored in the seventh network element may be transmitted from the second network element to the seventh network element. A method for the second network element to obtain the first data may be as follows: The inference input data are collected by the second network element. For example, the second network element may collect the inference input data for the inference in a case of receiving a task request for the inference task from another network element (such as a consumer network element). Alternatively, the inference input data may be actively collected by the second network element. The inference output data may be obtained by the second network element in a process of executing the inference task based on the first model and the inference input data. The label data may be obtained by the second network element from another network element (such as the source device of the label data). For example, the second network element may obtain the label data by transmitting the data obtaining request to another network element.

Optionally, before the first network element receives the first data transmitted by the seventh network element, the method may further include:
the first network element transmits a third request message to the seventh network element, where the third request message is used for requesting to obtain the first data.

In other words, when obtaining the first data, the first network element may transmit the third request message to the seventh network element, where the third request message is used for requesting to obtain the first data stored in the seventh network element. The seventh network element may transmit the first data to the first network element in a case of receiving the third request message.

Optionally, the third request message may be a subscription message. Optionally, the third request information includes at least one of the following:
an analytic identifier;
condition limitation information of the inference task;
target information of the inference task;
an identifier of the first model;
input data type information of the first model; and
output data type information of the first model.

Optionally, the third request information may also include a request reason. For example, the request reason may be that the first model is required to be re-trained, and alternatively, the accuracy of the first model does not meet an accuracy requirement or decreases.

It should be noted that in practical application, the first network element may obtain the first data in any one or more of the above three methods. In other words, the first network element may obtain the first data from the second network element, and/or determine the source information of the first data according to the use information for the first model of the second network element, and obtain the first data according to the source information, and/or obtain the first data from the seventh network element.

After obtaining the first data, the first network element may determine the first accuracy of the first model according to the first data.

In a case of determining the first accuracy according to the first data, optionally, if the first data include the inference input data and the label data, and exclude the inference output data, the first network element may first input the inference input data into the first model, then determine the inference output data corresponding to the inference input data, and finally determine the first accuracy according to the inference output data and the label data. If the first data include the inference output data and the label data, the first network element may determine the first accuracy directly according to the inference output data and the label data.

In a case of determining the first accuracy according to the inference output data and the label data, specifically, the inference output data may be compared with the label data, and a ratio of a number of correctness of inference output to a total number of inference is determined. The ratio indicates the first accuracy of the first model. The correctness of inference output may indicate that the inference output data are consistent with the label data, or a difference between the inference output data and the label data is within an allowable range. The first accuracy may have expression forms including a percentage (for example, 90%), a classification expression form (for example, high, medium, and low), or a normalized value (for example, 0.9), which is not specifically limited herein.

S204: The first network element re-trains or re-selects the first model in a case that the first accuracy meets a preset condition.

After determining the first accuracy of the first model, the first network element may determine whether the first accuracy meets the preset condition, so as to determine whether the first model is required to be re-trained or a second model is required to be re-selected.

Optionally, as an embodiment, the first accuracy meeting a preset condition may include at least one of the following that:
the first accuracy is less than a second accuracy, where the second accuracy is used for indicating accuracy of a model output result presented by the first model in a training phase or a test phase;
the first accuracy is less than a second accuracy, and a difference between the first accuracy and the second accuracy is greater than a preset value; and
the first accuracy is less than a preset accuracy, where the preset accuracy may be set as demanded in practice and is not specifically limited herein.

In a case that the first accuracy meets the preset condition, it may be indicated that the accuracy of the first model in practical inference does not meet a practical demand. In this case, the first network element may re-train the first model or re-select the second model. Re-training the first model may modify the first model without changing a model structure of the first model, or train a first model having a new model structure in a case of changing a model structure of the first model. Optionally, There may be two implementations for re-training the model. One is to re-perform model training from scratch based on the training data. The other is to fine adjust the first model based on the training data, so as to converge more rapidly and save on resources. Re-selecting the second model may be that another new existing model is re-selected, where the second model re-selected may be a model having accuracy higher than a first threshold or meeting a model performance requirement.

Optionally, as an embodiment, when the first network element re-trains the first model, the method may include:
target training data are obtained, where the target training data include target input data and target label data corresponding to the target input data; and
the first model is re-trained based on the target training data.

The target training data are different from the training data previously used when the first model is trained. When the first model is re-trained, new training data may be used to perform model training, so as to adjust the accuracy of the first model and improve the accuracy of a first model re-trained.

Optionally, as an embodiment, the first network element obtaining the target training data may include at least one of the following:
first training data used when the first model is trained are obtained;
a fifth network element is determined; second training data are obtained from the fifth network element, where the fifth network element is configured to provide the training data;
a sixth network element is determined; and inference data are obtained from the sixth network element, where the sixth network element is configured to provide the inference data.

The first training data, the second training data, and the inference data each include input data and label data.

The fifth network element may include a source device of the training data. Optionally, as an embodiment, the first network element determining the fifth network element may include:
The fifth network element is determined according to second information.

The second information includes an analytic identification information of the inference task executed based on the first model and/or condition limitation information of the inference task. The analytic ID (analytic ID) may identify a type of the inference task, and may be used for determining a corresponding model. The condition limitation information of the inference task (analytics filter information) may be used for defining a range for executing the inference task, for example, a time range and an area range.

The sixth network element may include a source device of the inference data. Optionally, as an embodiment, the first network element determining the sixth network element may include:
The sixth network element is determined according to the second information above.

After re-training the first model or re-selecting the second model, the first network element may obtain the second model. After the second model is obtained, optionally, as an embodiment, the method may further include at least one of the following:
model information of the second model obtained by re-training or the second model re-selected is transmitted to the second network element, and the second network element executes the inference task based on the second model; and
model information of the second model obtained by re-training or the second model re-selected is transmitted to the seventh network element, and the seventh network element stores the model information of the second model.

The second network element herein may be a second network element in a current task, that is, the second network element transmitting the use information of the first model to the first network element after previously executing the inference task based on the first model. After the first network element transmits the model information of the second model to the second network element, the second network element may re-execute the inference task before or execute a new inference task based on the second model. Since the second model is a model re-trained, accuracy of the inference output data is high. Optionally, the second network element may also be another network element that executes the inference task based on the second model. After the first network element transmits the model information of the second model to the another second network element, another second network element may execute the inference task based on the second model. Since the second model is a model re-trained, accuracy of the inference output data is high.

The seventh network element includes a data storage function network element, in other words, a network element that stores the model information of the second model. Optionally, the seventh network element may be an analytics data repository function (Analytics Data Repository Function, ADRF). The seventh network element stores the model information of the second model, so that other network elements may search for the model or the data conveniently.

The model information of the second model may include at least one of the following:
a model identification information of the second model;
an analytic identification information of the inference task executed based on the second model;
application range information of the second model;
a third accuracy of the second model, where the third accuracy is used for indicating accuracy of a model output result presented by the second model in a training phase or a test phase;
training data of the second model; and
the second model.

The model ID (Model ID) of the second model is used for indicating the second model. The analytic ID (analytic ID) of the inference task executed based on the second model may be used for determining the second corresponding model. The application range information of the second model may be used for defining a range for executing the inference task, for example, a time range and an area range. The third accuracy of the second model may be referred to as an accuracy in training (AiT) of the second model, and is used for describing accuracy of recognition or decisions reachable by the model after training. Specifically, the third accuracy may be use for indicating the degree of correctness and/or the degree of incorrectness of the model output result presented by the second model in the training phase or the test phase. A method for determining the third accuracy is the same as the method for determining the second accuracy of the first model, and the third accuracy may also have the same expression form as the second accuracy, which will not be repeated herein. The training data of the second model, training data used when the second model is trained, may include input data and label data, and may be specifically the target training data obtained when the first model is re-trained as described above. The second model includes, but is not limited to, description information for the second model and/or a model file. The model file may include a complete network structure, parameter information, etc. used for generating the second model.

It should be noted that the model information transmitted from the first network element to the second network element and the seventh network element individually may be the same or not. For example, the first network element may transmit the second model to the second network element, and may transmit the model identification information of the second model, the analytic identification information of the inference task executed based on the second model, the application range information of the second model, the third accuracy of the second model, the training data of the second model, and the second model to the seventh network element.

In the embodiment of the disclosure, the first accuracy of the first model in practical inference may be determined, and the first model may be re-trained in a case that the first accuracy does not meet the preset condition. Therefore, when the accuracy of the first model in practical inference decreases, the accuracy of the first model may be adjusted by re-training the first model or re-selecting the second model. Accordingly, the accuracy of the first model in practical inference is improved, which may better assist the in-network device and the out-of-network device in making a correct policy decision or executing an appropriate behavioral operation.

As shown in Fig. 3, a method 300 for processing data in a communication network is provided in an embodiment of the disclosure. The method may be executed by a second network element. The second network element may be the network side device in the embodiment shown in Fig. 1. In other words, the method may be executed by software or hardware installed on the second network element or the network side device. It should be noted that the second network element and the first network element in the embodiment shown in Fig. 2 may be deployed as different network element devices independently, or deployed jointly in the same network element device, for example, deployed jointly in the NWDAF. In this case, the NWDAF may provide a model training function and a model inference function. As shown in Fig. 3, the method includes:
S302: The second network element executes an inference task based on the first model, where the first model is trained by the first network element, and the first network element includes a model training function network element.

The first model may be trained by the first network element based on training data, where the training data may be obtained by the first network element from another network element (a network element that may provide the training data). In the step, the second network element may execute the inference task based on the first model trained by the first network element.

Optionally, as an embodiment, before executing the inference task based on the first model, the second network element may also first obtain the first model from the first network element, which may specifically include:
a model request message is transmitted to the first network element, where the model request message is used for requesting to obtain the first model; and
model information, transmitted by the first network element, of the first model is received.

After the second network element transmits the model request message to the first network element, the first network element may transmit model information of the first model to the second network element if having trained the first model. In this case, the second network element may receive the model information, transmitted by the first network element, of the first model. The first network element may obtain the training data from another network element (a network element that may provide the training data) if having not trained the first model, then train the first model based on the training data, and finally transmit the model information of the first model to the second network element. In this case, the second network element may receive the model information, transmitted by the first network element, of the first model. The second network element may receive the model information of the first model through Nnwdaf_MLModelProvision_Notify or Nnwdaf_MLModelInfo_Response.

The model information of the first model includes at least one of the following:
the first model; and
a second accuracy of the first model, where the second accuracy indicates accuracy of a model output result presented by the first model in a training phase or a test phase.

The second accuracy of the first model may be an accuracy in training (AiT) of the first model, and may be used for indicating an accuracy in a model training phase. Specifically, the second accuracy may be used for indicating a degree of correctness and/or a degree of incorrectness of a training result in the model training phase. Optionally, the second accuracy may be equal to a value obtained by dividing a number of correctness of model decision results by a total number of decisions. In other words, second accuracy=number of correctness of decision results/total number of decisions. The correctness of decision results may indicate that the decision results are consistent with the label data, and/or that a difference between the decision results and the label data is within an allowable range. The second accuracy may have expression forms including a percentage (for example, 90%), a classification expression form (for example, high, medium, and low), and a normalized value (for example, 0.9), which is not specifically limited herein. The second accuracy may indicate the accuracy or the degree of incorrectness of the first model in the model training phase positively or negatively. For example, the accuracy of the first model in the training phase may be indicated negatively by calculating a training error or a training error rate of the model. There are various methods for calculating the training error or the training error rate, which may be, for example, the MAE and the MSE.

After receiving the model information of the first model, the second network element may execute the inference task based on the first model.

Optionally, as an embodiment, the step that the second network element executes an inference task based on the first model includes at least one of the following:
a task request, transmitted by an eighth network element, for the inference task is received; the inference task is executed based on the first model;
a task request for the inference task triggered through simulation of the second network element; and the inference task is executed based on the first model.

In other words, execution of the inference task by the second network element based on the first model may be triggered when the inference task transmitted by the eighth network element is received and/or may be executed in a verification test phase set by the second network element. In the phase, the second network element itself simulates to trigger the inference task, so as to calculate the accuracy in use of the model. The eighth network element includes a consumer network element, which may be specifically a consumer NF (consumer NF), etc. The consumer NF may be a 5G network element, an AF terminal, etc. The eighth network element may transmit the inference task to the second network element through Nnwdaf_AnalyticsSubscription_Subscribe or Nnwdaf_AnalyticsInfo_Request.

In a case that the inference task is transmitted from the eighth network element to the second network element, if the inference task carries inference input data, the inference input data may be input into the first model, so as to obtain inference output data. If the inference task does not carry inference input data, when the second network element executes the inference task based on the first model, the method may include:
an input data obtaining request message is transmitted to a third network element, where the input data obtaining request message is used for requesting to obtain the inference input data corresponding to the inference task;
the inference input data transmitted by the third network element are received; and
the inference input data are input into the first model, so as to obtain the inference output data.

The third network element herein may be the third network element in the embodiment shown in Fig. 2. The third network element may provide the inference input data corresponding to the inference task. The third network element may determine inference input data to be fed back to the second network element through the input data obtaining request message. The input data obtaining request message may include at least one of the following: type information of the inference input data; target information corresponding to the inference input data; and time information corresponding to the inference input data. Reference may be made to a corresponding content in the embodiment shown in Fig. 2 for a specific implementation, which will not be repeated herein. The second network element may transmit the input data obtaining request message to the third network element through Nnwdaf_AnalyticsSubscription_Subscribe or Nnwdaf_AnalyticsInfo_Request.

After receiving the input data obtaining request message, the third network element may transmit the corresponding inference input data to the second network element. After receiving the inference input data transmitted by the third network element, the second network element may input the inference input data into the first model, so as to obtain the corresponding inference output data.

For example, the second network element executes an inference calculation through a model 1 corresponding to an analytic ID=UE mobility (identifying a type of the inference task, for example, analytic ID=UE mobility, used for predicting a movement trajectory of a user) and a value of input data (for example, a UE ID, a time, and a current service state of the UE) corresponding to the model 1, so as to obtain an output value of the inference output, UE location.

In a case that the inference task is triggered by the second network element, when the second network element executes the inference task based on the first model, the inference input data may be generated or determined by the second network element, and then input into the first model, so as to obtain the inference output data.

It should be noted that when executing the inference task, the second network element may obtain a plurality of output result values after an inference calculation process is executed once, and alternatively, obtain a plurality of inference output results after the inference task is executed repeatedly.

Optionally, as an embodiment, if the inference task executed by the second network element is transmitted by the eighth network element, after executing the inference task based on the first model, the second network element may further transmit the inference output data obtained to the eighth network element, so as to assist the eighth network element in making a policy decision.

S304: At least one of use information of the first model and first data is transmitted to the first network element, and/or first instruction information is transmitted to a seventh network element, where the first instruction information is used for instructing the seventh network element to store the first data of the inference task, and the seventh network element includes a data storage function network element.

After executing the inference task, the second network element may transmit at least one of the use information for the first model of the second network element and the first data to the first network element. After receiving at least one of the use information and the first data, the first network element may determine whether to re-train the first model or re-select a second model. Reference may be made to a corresponding step in the embodiment shown in Fig. 2 for a particular implementation, which will not be repeated herein.

The use information for the first model of the second network element includes at least one of the following:
a model identification information of the first model;
an analytic identification information of the inference task executed based on the first model;
condition limitation information of the inference task; and
target information of the inference task.

The model ID (Model ID) of the first model may be used for indicating that the model used by the second network element is the first model. The analytic ID (analytic ID) may identify a type of the inference task, and the analytic identification information of the inference task executed based on the first model may be used for determining the first model. The condition limitation information of the inference task (analytics filter information) may be used for defining an execution range for the second network element to execute the inference task, for example, a time range and an area range. The analytics target (analytics target) may be used for indicating a target for which the inference task executed by the second network element is intended, for example, target UE (target UE, in other words, a task target is certain UE), or may be an NF instance. Optionally, the use information for the first model of the second network element may also include the inference input data and/or the inference output data generated when the second network element executed the inference task based on the first model.

Optionally, as an embodiment, before the second network element transmits the use information of the first model to the first network element, the method further includes at least one of the following:
the second network element receives a first request message transmitted by the first network element, where the first request message is used for requesting to obtain the use information for the first model of the second network element.

In other words, in a case of receiving the first request message from the first network element, the second network element may transmit the use information of the first model to the first network element.

The first data may include at least one of the following:
inference input data;
inference output data corresponding to the inference input data; and
label data corresponding to the inference input data.

The inference input data may be model input data generated when the inference task is executed based on the first model. The inference output data may be model output results obtained after the inference input data are inferred based on the first model. The label data may be practical result data corresponding to the inference input data.

Optionally, as an embodiment, before the second network element transmits the first data to the first network element, the method further includes at least one of the following:
the second network element collects the inference input data; and
the second network element collects the label data corresponding to the inference input data.

In other words, in a case that the first data include the inference input data, the inference input data may be collected by the second network element. In a case that the first data include the label data corresponding to the inference input data, the label data may also be collected by the second network element. Optionally, in a case that the first data include the inference output data, the inference output data may be obtained after the second network element performs the inference task based on the first model and the inference input data.

Optionally, the step that the second network element collects the inference input data may include at least one of the following:
the second network element collects the inference input data in a case of receiving a task request for the inference task from an eighth network element, where the eighth network element includes a consumer network element; and
the second network element actively collects the inference input data.

In other words, the second network element may collect the inference input data for the inference task in a case of receiving the task request for the inference task. Alternatively, the second network element actively collects the inference input data. The task request for the inference task may be transmitted from the eighth network element to the second network element. The eighth network element includes the consumer network element, which may be specifically a consumer NF, etc. The consumer NF may be a 5G network element, an AF terminal, etc.

Optionally, the step that the second network element collects the label data corresponding to the inference input data may include:
The second network element transmits a data obtaining request to the fourth network element, where the data obtaining request is used for requesting to obtain the label data corresponding to the inference input data.

The fourth network element may be a source device of the label data. When collecting the label data, the second network element may transmit a data request to the fourth network element. When receiving the data obtaining request, the fourth network element may transmit the corresponding label data to the second network element.

Optionally, before the second network element transmits the first data to the first network element, the method may further include:
a second request message transmitted by the first network element is received, where the second request message is used for requesting to obtain the first data collected by the second network element.

In other words, the second network element may transmit the first data to the first network element in a case of receiving the second request message transmitted by the first network element.

Optionally, the second request message may be a subscription message. Optionally, the second request information includes at least one of the following:
an analytic identifier;
condition limitation information of the inference task;
target information of the inference task;
an identifier of the first model;
input data type information of the first model; and
output data type information of the first model.

Optionally, the second request information may also include a request reason. For example, the request reason may be that the first model is required to be re-trained, and alternatively, the accuracy of the first model does not meet an accuracy requirement or decreases.

In the embodiment, after executing the inference task, the second network element may also transmit first instruction information to the seventh, where the first instruction information is used for instructing the seventh network element to store the first data of the inference task. The seventh network element includes a data storage function network element, which may be specifically an ADRF.

Optionally, the first instruction information includes at least one of the following:
an analytic identifier;
condition limitation information of the inference task;
target information of the inference task;
inference input data corresponding to the inference task;
inference output data corresponding to the inference task; and
label data corresponding to the inference task.

Reason information including that the second network element completes the inference task, the seventh network element is required to regularly store the first data, and the accuracy of the first model used when the second network element executes the inference task does not meet an accuracy requirement or decreases is stored.

After the second network element transmits the first instruction information to the seventh network element, the seventh network element may store the first data according to the first instruction information, the first data may be determined by the second network element through the above method, which will not be repeated herein. After the seventh network element stores the first data, when required to obtain the first data, the first network element may obtain the first data from the seventh network element. Reference may be made to a corresponding content in the embodiment shown in Fig. 2 for a particular implementation, which will not be repeated herein.

Optionally, as an embodiment, the second network element may be further configured to:
receive model information, transmitted by the first network element, of a second model, where the second model is obtained after the first network element re-trains the first model, and alternatively, the second model is a model re-selected by the first network element.

Specifically, after receiving the use information for the first model of the second network element, and/or the first data, the first network element may re-train the first model or re-select the second model in a case of determining that the first accuracy of the first model meets a preset condition. After re-training or re-selecting the second model, the first network element may transmit the model information of the second model to the second network element. In this case, the second network element may receive the model information, transmitted by the first network element, of the second model. Then, the second network element may re-execute the inference task previously executed or execute a new inference task based on the second model. Since the second model is the model re-trained, accuracy of the inference output data is high.

The model information of the second model may include at least one of the following:
a model identification information of the second model;
an analytic identification information of the inference task executed based on the second model;
application range information of the second model;
a third accuracy of the second model, where the third accuracy is used for indicating accuracy of a model output result presented by the second model in a training phase or a test phase;
training data of the second model; and
the second model.

The model ID (Model ID) of the second model is used for indicating the second model. The analytic ID (analytic ID) of the inference task executed based on the second model may be used for determining the second corresponding model. The application range information of the second model may be used for defining a range for executing the inference task, for example, a time range and an area range. The third accuracy of the second model may be referred to as an accuracy in training (AiT) of the second model, and is used for describing accuracy of recognition or decisions reachable by the model after training. Specifically, the third accuracy may be used for indicating the degree of correctness and/or the degree of incorrectness of the model output result presented by the second model in the training phase or the test phase. A method for determining the third accuracy is the same as the method for determining the second accuracy of the first model in the embodiment shown in Fig. 2. The third accuracy may also have the same expression form as the second accuracy, which will not be repeated herein. The training data of the second model, training data used when the second model is trained, may include input data and label data, and may be specifically the target training data obtained when the first model is re-trained as described above. The second model includes, but is not limited to, description information for the second model and/or a model file. The model file may include a complete network structure, parameter information, etc. used for generating the second model.

In the embodiment of the disclosure, the first accuracy of the first model in practical inference may be determined, and the first model may be re-trained in a case that the first accuracy does not meet the preset condition. Therefore, when the accuracy of the first model in practical inference decreases, the accuracy of the first model may be adjusted by re-training the first model. Accordingly, the accuracy of the first model in practical inference is improved, which may better assist the in-network device and the out-of-network device in making a correct policy decision or executing an appropriate behavioral operation.

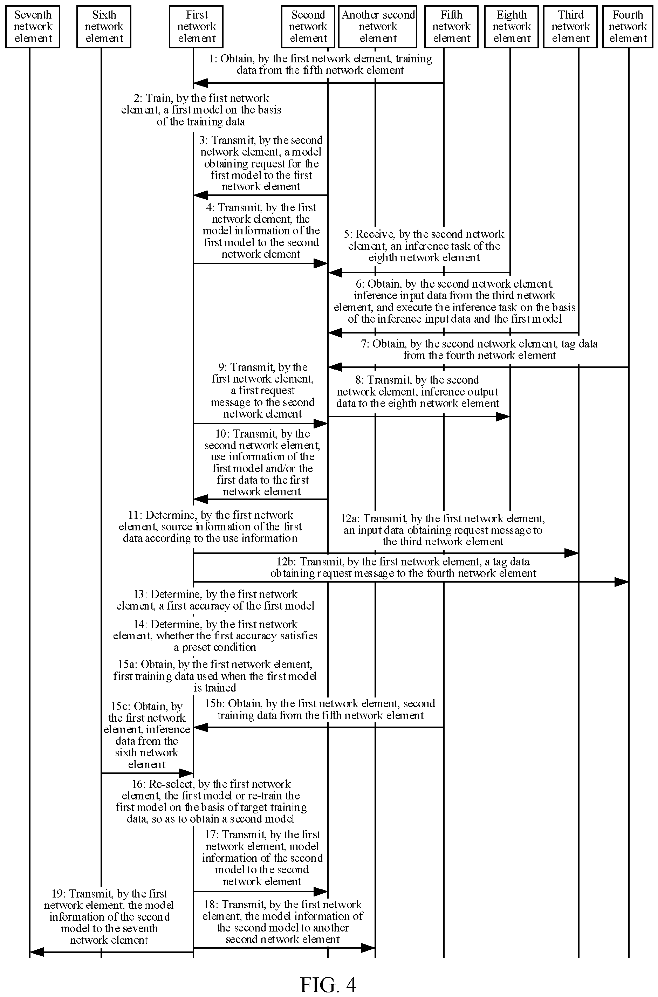

In a possible application scenario, the method for processing data in a communication network according to the embodiment of the disclosure may be shown in Fig. 4. The method for processing data in a communication network shown in Fig. 4 may include:
Step 1: The first network element obtains the training data from the fifth network element.
Step 2: The first network element trains the first model based on the training data.
Step 3: The second network element transmits the model obtaining request for the first model to the first network element.
Step 4: The first network element transmits the model information of the first model to the second network element.

It should be noted that a successive execution sequence of the above steps 1-4 may be step 1, step 2, step 3, and step 4, and alternatively, step 3, step 1, step 2, and step 4.

Step 5: The second network element receives the inference task of the eighth network element.

It should be noted that a successive execution sequence of the above steps 1-4 and 5 may be steps 1-4 and step 5, and alternatively, step 5 and steps 1-4.

Step 6: The second network element obtains the inference input data from the third network element, and executes the inference task based on the inference input data and the first model.

Step 7: The second network element obtains the label data from the fourth network element.

Step 8: The second network element transmits the inference output data to the eighth network element.

It should be noted that the second network element may also set one verification test phase. In the phase, the second network element itself may simulate to trigger the inference task, so as to calculate the accuracy in use of the model. Specifically, in a case that after executing step 4, the second network element may simulate to trigger the inference task and execute the inference task based on the first model, the above steps 5-7 are replaced with the steps that the second network element simulates to trigger the inference task and executes the inference task based on the first model. The second network element executing steps 5-7 is described as an example in Fig 3.

Step 9: The first network element transmits the first request message to the second network element, where the first request message is used for requesting to obtain the use information for the first model of the second network element, and/or the first data collected by the second network element.

Step 10: The second network element transmits the use information of the first model and/or the first data to the first network element.

The use information of the first model includes at least one of the following:
a model identification information of the first model;
an analytic identification information of the inference task executed based on the first model;
condition limitation information of the inference task; and
target information of the inference task.

The first data include at least one of the following:
inference input data;
inference output data corresponding to the inference input data; and
label data corresponding to the inference input data.

Step 11: The first network element determines the source information of the first data according to the use information.

The first data include at least one of the following:
inference input data;
inference output data corresponding to the inference input data; and
label data corresponding to the inference input data.

The source information of the first data includes at least one of the following:
a third network element, where the third network element is configured to provide the inference input data corresponding to the inference task; and
a fourth network element, where the fourth network element is configured to provide the label data corresponding to the inference task.

Step 12a: The first network element transmits the input data obtaining request message to the third network element.

The input data obtaining request message is used for requesting to obtain the inference input data. The input data obtaining request message includes at least one of the following:
type information of the inference input data;
target information corresponding to the inference input data; and
time information corresponding to the inference input data.

Step 12b: The first network element transmits the label data obtaining request message to the fourth network element.

The label data obtaining request message is used for requesting to obtain the label data. The label data obtaining request message includes at least one of the following:
type information of the label data;
target information corresponding to the label data; and
time information corresponding to the label data.

It should be noted that the first network element may execute at least one of the above steps 12a and 12b.

It should also be noted that the first network element may optionally execute steps 11, 12a, and 12b. For example, if the second network element transmits the first data, instead of the use information of the first model, and the first data include the inference input data, the inference output data, and the label data, the first network element may not execute steps 11, 12a, and 12b. If the second network element transmits the use information of the first model and the first data, in a case that the first data include the label data only, the first network element may execute steps 11 and 12a, and in a case that the first data include the inference input data only, the first network element may execute steps 11 and 12b. The steps specifically executed by the first network element may be determined according to an actual situation, as long as it is ensured that the first network element may obtain the inference input data, the inference output data, and the label data, which is not specifically limited herein.

In addition, the first network element may obtain the first data from the seventh network element. Only obtaining the use information of the first model and/or the first data from the second network element is described as an example in Fig. 4.

Step 13: The first network element determines the first accuracy of the first model.

The first accuracy is used for indicating the accuracy of the first model in practical inference, and may be the degree of correctness or the degree of incorrectness.

Step 14: The first network element determines whether the first accuracy meets the preset condition.

The first accuracy meeting the preset condition includes at least one of the following:
the first accuracy is less than the second accuracy, where the second accuracy is used for indicating the accuracy of the model output result presented by the first model in the training phase or the test phase;
the first accuracy is less than the second accuracy, and a difference between the first accuracy and the second accuracy is greater than the preset value; and
the first accuracy is less than the preset accuracy.

In a case that the first accuracy meets the preset condition, at least one of steps 15a-15c may be performed. In a case that the first accuracy does not meet the preset condition, no subsequent steps are required to be executed. Executing at least one of steps 15a-15c is described as an example herein.

Step 15a: The first network element obtains the first training data used when the first model is trained.

Step 15b: The first network element obtains the second training data from the fifth network element.

Step 15c: The first network element obtains the inference data from the sixth network element.

Step 16: The first network element re-selects the first model or re-trains the first model based on the target training data, so as to obtain the second model.

The target training data herein include the data obtained through at least one of the above steps 15a-15c. In other words, the target training data include at least one of the following:
the first training data used when the first model is trained;
the second training data obtained from the fifth network element; and
the inference data obtained from the sixth network element.

Step 17: The first network element transmits the model information of the second model to the second network element.

The model information of the second model includes at least one of the following:
a model identification information of the second model;
an analytic identification information of the inference task executed based on the second model;
application range information of the second model;
a third accuracy of the second model, where the third accuracy is used for indicating the accuracy of the model output result presented by the second model in the training phase or the test phase;
training data of the second model; and
the second model.

Step 18: The first network element transmits the model information of the second model to another second network element.

Step 19: The first network element transmits the model information of the second model to the seventh network element.

In a case of re-training or re-selecting the first model to obtain the second model, the first network element may execute the above steps 17-19 or not. In a case of execution, at least one of steps 17-19 may be executed.

Reference may be made to particular implements of corresponding steps in Figs. 2 and 3 for a particular implementation of each step in Fig. 4, which will not be repeated herein.

In the embodiment of the disclosure, the first accuracy of the first model in practical inference may be determined, and the first model may be re-trained in a case that the first accuracy does not meet the preset condition. Therefore, when the accuracy of the first model in practical inference decreases, the accuracy of the first model may be adjusted by re-training the first model or re-selecting the second model. Accordingly, the accuracy of the first model in practical inference is improved, which may better assist the in-network device and the out-of-network device in making the correct policy decision or executing the appropriate behavioral operation.

In the method for processing data in a communication network according to the embodiment of the disclosure, an execution entity may be an apparatus for processing data in a communication network. In the embodiments of the disclosure, the apparatus for processing data in a communication network according to an embodiment of the disclosure is described with the apparatus for processing data in a communication network executing the method for processing data in a communication network as an example.

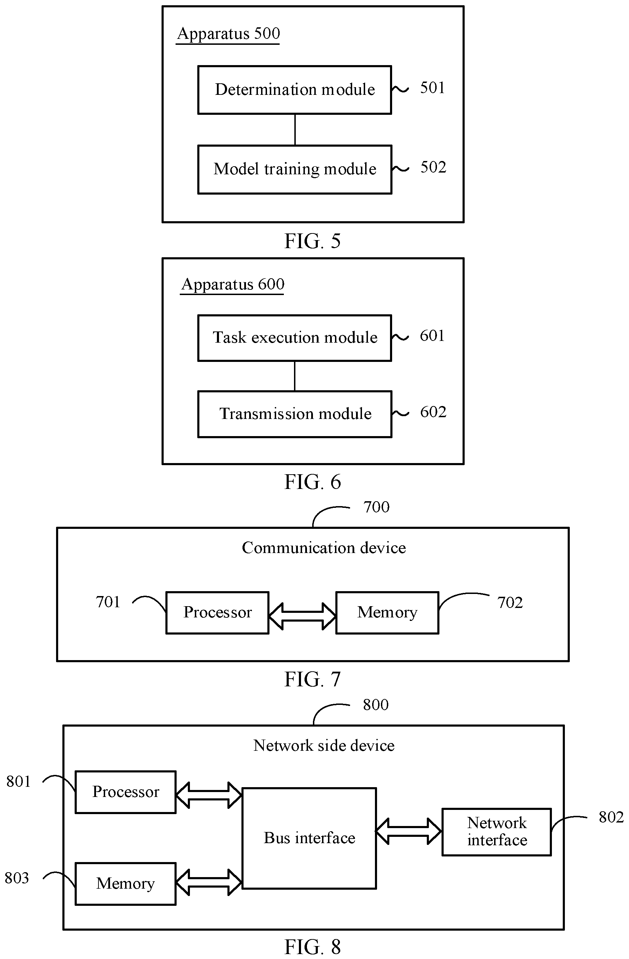

Fig. 5 is a schematic structural diagram of an apparatus for processing data in a communication network according to an embodiment of the disclosure. The apparatus may correspond to the first network element in other embodiments. As shown in Fig. 5, the apparatus 500 includes:
a determining module 501, where the determination module is configured to determine a first accuracy of a first model, where the first accuracy is used for indicating accuracy of the first model in practical inference; and
a model training module 502, where the model training module is configured to re-train the first model or re-select a second model in a case that the first accuracy meets a preset condition.

Optionally, as an embodiment, the first accuracy is used for indicating at least one of the following:
a degree of correctness of inference output of the first model in practical inference; and
a degree of incorrectness of inference output of the first model in practical inference.

Optionally, as an embodiment, the determination module 501 is configured to:
obtain first data; and determine the first accuracy based on the first data; where the first data include at least one of the following:
inference input data;
inference output data corresponding to the inference input data; and
label data corresponding to the inference input data.

Optionally, as an embodiment, the determination module 501 is configured to:
receive use information, transmitted by a second network element, of the first model;
determine source information of the first data according to the use information; and
obtain the first data according to the source information.

Optionally, as an embodiment, the determination module 501 is configured to:
receive the first data transmitted by a second network element, where the second network element includes a model inference function network element.

Optionally, as an embodiment, the determination module 501 is configured to:
receive the first data transmitted by a seventh network element, where the seventh network element includes a data storage function network element.

Optionally, as an embodiment, the determination module 501 is further configured to:
transmit a first request message to the second network element, where the first request message is used for requesting to obtain the use information for the first model of the second network element.

Optionally, as an embodiment, the determination module 501 is further configured to:
transmit, by the first network element, a second request message to the second network element, where the second request message is used for requesting to obtain the first data collected by the second network element.

Optionally, as an embodiment, the determination module 501 is further configured to:
transmit a third request message to the seventh network element, where the third request message is used for obtaining the first data.

Optionally, as an embodiment, the model training module 502 is further configured to:
obtain the first model through training; and transmit model information of the first model to the second network element; where
the model information of the first model includes at least one of the following:
   the first model; and
   a second accuracy of the first model, where the second accuracy is used for indicating accuracy of a model output result presented by the first model in a training phase or a test phase.

Optionally, as an embodiment, the use information includes at least one of the following:
a model identification information of the first model;
an analytic identification information of the inference task executed based on the first model;
condition limitation information of the inference task; and
target information of the inference task.

Optionally, as an embodiment, the source information includes at least one of the following:
a third network element, where the third network element is configured to provide the inference input data corresponding to the inference task; and
a fourth network element, where the fourth network element is configured to provide the label data corresponding to the inference task.

Optionally, as an embodiment, the determination module 501 is configured to at least one of the following:
transmit an input data obtaining request message to the third network element, where the input data obtaining request message is used for requesting to obtain the inference input data; and
transmit a label data obtaining request message to the fourth network element, where the label data obtaining request message is used for requesting to obtain the label data; where
the input data obtaining request message includes at least one of the following:
   type information of the inference input data;
   target information corresponding to the inference input data; and
   time information corresponding to the inference input data; and
   the label data obtaining request message includes at least one of the following:
      type information of the label data;
      target information corresponding to the label data; and
      time information corresponding to the label data.

Optionally, as an embodiment, the determination module 501 is configured to:
input the inference input data into the first model, and determine the inference output data; and
determine the first accuracy according to the inference output data and the label data.

Optionally, as an embodiment, the first accuracy meeting a preset condition includes at least one of the following that:
the first accuracy is less than a second accuracy, where the second accuracy is used for indicating accuracy of a model output result presented by the first model in a training phase or a test phase;
the first accuracy is less than a second accuracy, and a difference between the first accuracy and the second accuracy is greater than a preset value; and
the first accuracy is less than a preset accuracy.

Optionally, as an embodiment, the second accuracy is used for indicating at least one of the following:
a degree of correctness of the model output result presented by the first model in the training phase or the test phase; and
a degree of incorrectness of the model output result presented by the first model in the training phase or the test phase.

Optionally, as an embodiment, the model training module 502 is configured to:
obtain target training data, where the target training data include target input data and target label data corresponding to the target input data; and
re-train the first model based on the target training data.

Optionally, as an embodiment, the model training module 502 is configured to at least one of the following:
obtain first training data used when the first model is trained;
determine a fifth network element; obtain second training data from the fifth network element, where the fifth network element is configured to provide the training data;
determine a sixth network element; and obtain inference data from the sixth network element, where the sixth network element is configured to provide the inference data.

Optionally, as an embodiment, the model training module 502 is configured to:
determine the fifth network element according to second information; where
the second information includes an analytic identification information of the inference task executed based on the first model and/or condition limitation information of the inference task.

Optionally, as an embodiment, the model training module 502 is configured to:
determine the sixth network element according to the second information.

Optionally, as an embodiment, the model training module 502 is further configured to at least one of the following:
transmit model information of a second model obtained by re-training or the second model re-selected to a second network element, and execute, by the second network element, an inference task based on the second model; and
transmit model information of a second model obtained by re-training or the second model re-selected to a seventh network element, and store, by the seventh network element, the model information of the second model; where
the model information of a second model includes at least one of the following:
   a model identification information of the second model;
   an analytic identification information of the inference task executed based on the second model;
   application range information of the second model;
   a third accuracy of the second model, where the third accuracy is used for indicating accuracy of a model output result presented by the second model in a training phase or a test phase;
   training data of the second model; and
   the second model.

Optionally, as an embodiment, the third accuracy is used for indicating at least one of the following:
a degree of correctness of the model output result presented by the second model in the training phase or the test phase; and
a degree of incorrectness of the model output result presented by the second model in the training phase or the test phase.

Optionally, as an embodiment, the first network element includes a model training function network element;
the second network element includes a model inference function network element;
the third network element includes a source device of the inference input data;
the fourth network element includes a source device of the label data;
the fifth network element includes a source device of the training data;
the sixth network element includes a source device of the inference data; and
the seventh network element includes a data storage function network element.

Reference may be made to the flows of the method 200 according to the embodiment of the disclosure for the apparatus 500 according to the embodiment of the disclosure. Moreover, all units/modules in the apparatus 500 and other operations and/or functions above are configured to implement corresponding flows of the method 200 respectively, and realize the same or equivalent technical effects, which will not be described in detail herein for brevity.

Fig. 6 is a schematic structural diagram of an apparatus for processing data in a communication network according to an embodiment of the disclosure. The apparatus may correspond to the second network element in other embodiments. As shown in Fig. 6, the apparatus 600 includes:
a task execution module 601, where the task execution module is configured to execute inference task based on a first model, the first model is trained by a first network element, and the first network element includes a model training function network element; and
a transmission module 602, where the transmission module is configured to transmit at least one of use information of the first model and first data to the first network element, and/or transmit first instruction information to a seventh network element, where the first instruction information is used for instructing the seventh network element to store the first data of the inference task, and the seventh network element includes a data storage function network element.

Optionally, as an embodiment, the first data include at least one of the following:
inference input data;
inference output data corresponding to the inference input data; and
label data corresponding to the inference input data.

Optionally, as an embodiment, the apparatus 600 further includes a first reception module 603, where the first reception module 603 is configured to:
receive a first request message transmitted by the first network element, where the first request message is used for requesting to obtain the use information for the first model of the second network element.

Optionally, as an embodiment, the apparatus 600 further includes a second reception module 604, where the second reception module 604 is configured to:
receive a second request message transmitted by the first network element, where the second request message is used for requesting to obtain the first data collected by the second network element.

Optionally, as an embodiment, the apparatus 600 further includes a collection module 605, where the collection module 605 is configured to at least one of the following:
collect, by the second network element, the inference input data; and
collect, by the second network element, label data corresponding to the inference input data.

Optionally, as an embodiment, the collection module 605 is further configured to at least one of the following:
collect the inference input data in a case of receiving a task request for the inference task from an eighth network element, where the eighth network element includes a consumer network element; and
actively collect, by the second network element, the inference input data.

Optionally, as an embodiment, the collection module 605 is further configured to:
transmit, by a second network element, a data obtaining request to a fourth network element, where the data obtaining request is used for requesting to obtain the label data corresponding to the inference input data.

Optionally, as an embodiment, the task execution module 601 is further configured to:
receive model information, transmitted by the first network element, of a second model, where the second model is obtained after the first network element re-trains the first model, and alternatively, the second model is a model re-selected by the first network; where
the model information of a second model includes at least one of the following:
   a model identification information of the second model;
   an analytic identification information of the inference task executed based on the second model;
   application range information of the second model;
   a third accuracy of the second model, where the third accuracy is used for indicating accuracy of a model output result presented by the second model in a training phase or a test phase;
   training data of the second model; and
   the second model.

Optionally, as an embodiment, the third accuracy is used for indicating at least one of the following:
a degree of correctness of the model output result presented by the second model in the training phase or the test phase; and
a degree of incorrectness of the model output result presented by the second model in the training phase or the test phase.

Optionally, as an embodiment, the task execution module 601 is further configured to:
transmit a model request message to the first network element, where the model request message is used for requesting to obtain the first model; and
receive model information, transmitted by the first network element, of the first model; where
the model information of the first model includes at least one of the following:
   the first model; and
   a second accuracy of the first model, where the second accuracy is used for indicating accuracy of a model output result presented by the first model in a training phase or a test phase.

Optionally, as an embodiment, the second accuracy is used for indicating at least one of the following:
a degree of correctness of the model output result presented by the first model in the training phase or the test phase; and
a degree of incorrectness of the model output result presented by the first model in the training phase or the test phase.

Optionally, as an embodiment, the task execution module 601 is configured to at least one of the following:
receive a task request, transmitted by an eighth network element, for the inference task; execute the inference task based on the first model, where the eighth network element includes a consumer network element;
obtain a task request for the inference task triggered through simulation of the second network element; and execute the inference task based on the first model.

Optionally, as an embodiment, the task execution module 601 is configured to:
transmit an input data obtaining request message to a third network element, where the input data obtaining request message is used for requesting to obtain inference input data corresponding to the inference task;
receive the inference input data transmitted by the third network element; and
input the inference input data into the first model, so as to obtain inference output data.

Optionally, as an embodiment, the task execution module 601 is further configured to:
transmit the inference output data to the eighth network element.

Optionally, as an embodiment, the use information includes at least one of the following:
a model identification information of the first model;
an analytic identification information of the inference task executed based on the first model;
condition limitation information of the inference task; and
target information of the inference task.

Reference may be made to the flows of the method 300 according to the embodiment of the disclosure for the apparatus 600 according to the embodiment of the disclosure. Moreover, all units/modules in the apparatus 600 and other operations and/or functions above are configured to implement corresponding flows of the method 300 respectively, and realize the same or equivalent technical effects, which will not be described in detail herein for brevity.

The apparatus for processing data in a communication network in the embodiment of the disclosure may be an electronic device, for example, an electronic device having an operating system, or a component in an electronic device, for example, an integrated circuit or a chip. The electronic device may be a terminal or a device other than the terminal. Illustratively, the terminal may be of, but is not limited to, a type of the terminal 11 listed above. Other device may be a server, a network attached storage (Network Attached Storage, NAS), etc., which is not specifically limited in the embodiment of the disclosure.

The apparatus for processing data in a communication network according to the embodiment of the disclosure may implement all processes implemented in the method embodiments in Figs. 2-4, and reach the same technical effects, which will not be described in detail herein to avoid repetition.

Optionally, as shown in Fig. 7, a communication device 700 is further provided in an embodiment of the disclosure. The communication device includes a processor 701 and a memory 702, where a program or instruction executable on the processor 701 is stored in the memory 702, in a case that the communication device 700 is a network side device, when the program or instruction is executed by the processor 701, all steps in the above embodiment of the method for processing data in a communication network are implemented, and the same technical effects may be reached, which will not be described in detail herein to avoid repetition.

A network side device is further provided in an embodiment of the disclosure. The network side device includes a processor and a communication interface, where the processor is configured to determine a first accuracy of a first model, where the first accuracy is used for indicating accuracy of the first model in practical inference; and re-train the first model or re-select a second model in a case that the first accuracy meets a preset condition. Alternatively, the processor is configured to execute an inference task based on a first model, where the first model is trained by a first network element, and the first network element includes a model training function network element. The communication interface is configured to transmit at least one of use information of the first model and first data to the first network element, and/or transmit first instruction information to a seventh network element, where the first instruction information is used for instructing the seventh network element to store the first data of the inference task, and the seventh network element includes a data storage function network element. The embodiment of the network side device corresponds to the above method embodiment of the network side device. All implementation processes and implementations of the above method embodiment may be suitable for the embodiment of the network side device, and may reach the same technical effects.

Specifically, a network side device is further provided in an embodiment of the disclosure. As shown in Fig. 8, the network side device 800 includes: a processor 801, a network interface 802, and a memory 803. The network interface 802 is, for example, a common public radio interface (common public radio interface, CPRI).

Specifically, the network side device 800 in the embodiment of the disclosure further includes: an instruction or program stored in the memory 803 and executable on the processor 801. The processor 801 invokes the instruction or program in the memory 803 to execute the methods executed by all the modules shown in Fig. 5 or 6, and reach the same technical effects, which will not be described in detail herein to avoid repetition.

A readable storage medium is further provided in an embodiment of the disclosure. The readable storage medium stores a program or instruction, where when executed by a processor, the program or instruction implements all processes in the above embodiment of the method for processing data in a communication network, and may reach the same technical effects, which will not be described in detail herein to avoid repetition.

The processor is the processor in the terminal in the above embodiment. The readable storage medium includes a computer-readable storage medium, such as a computer read-only memory (ROM), a random access memory (RAM), a magnetic disk, or an optical disc, etc.

A chip is further provided in an embodiment of the disclosure. The chip includes a processor and a communication interface, where the communication interface is coupled to the processor, and the processor is configured to run a program or instruction, so as to implement all processes in the above embodiment of the method for processing data in a communication network, and reach the same technical effects, which will not be described in detail herein to avoid repetition.

It should be understood that the chip mentioned in the embodiment of the disclosure may also be referred to as a system-level chip, a system chip, a chip system, a chip on a system on chip, etc.

A computer program/program product is further provided in an embodiment of the disclosure. The computer program/program product is stored in a storage medium, and the computer program/program product is executed by at least one processor, so as to implement all processes in the above embodiment of the method for processing data in a communication network, and realize the same technical effects, which will not be described in detail herein to avoid repetition.

A system for processing data in a communication network is further provided in an embodiment of the disclosure. The system includes: a first network side device and a second network side device, where the first network side device may be configured to execute steps of the above method for processing data in a communication network shown in Fig. 2, and the network side device may be configured to execute steps of the above method for processing data in a communication network shown in Fig. 3.

It should be noted that the terms "include", "comprise", "encompass", or their any other variations herein are intended to cover non-exclusive inclusions. Therefore, processes, methods, articles, or apparatuses including a series of elements further include other elements not explicitly listed or elements inherent to such processes, methods, articles, or apparatuses, except for those elements. Without more limitations, an element defined by the phrase "comprise a..." and "include a..." does not exclude that other identical elements still exist in the processes, methods, articles, or apparatuses including the element. In addition, it should be noted that the scope of the method and apparatus in the implementations of the disclosure is not limited to executing functions in an order shown or discussed, and may further include executing functions in a substantially simultaneous manner or in a reverse order according to the functions involved. For example, the methods described may be executed in an order different from the order described, and various steps may be added, omitted, or combined. In addition, features described with reference to some examples may be combined in other examples.

Through the descriptions in the above implementations, a person skilled in the art can clearly understand that the method in the above embodiment can be implemented by means of software and a necessary general hardware platform, and certainly can also be implemented by means of hardware. In many cases, the former is a better implementation. Based on such understanding, the technical solutions of the disclosure in nature or the part contributing to the related art can be implemented in a form of a computer software product. The computer software product is stored in one storage medium (for example, the ROM/RAM, the magnetic disk, and the optical disc), and includes several instructions configured to cause one terminal (which may be a mobile phone, a computer, a server, an air conditioner, or a network device, etc.), so as to execute the method in each embodiment of the disclosure.

The embodiments of the disclosure have been described above with reference to the accompanying drawings. However, the disclosure is not limited to the above particular implementations, and the above particular implementations are merely illustrative, but are not restrictive. Those of ordinary skill in the art can also make various forms under the teaching of the disclosure without departing from the spirit of the disclosure and the scope of protection of the claims, and such variations fall within the scope of protection of the disclosure.

## Claims

1. A method for processing data in a communication network, comprising:
determining, by a first network element, a first accuracy of a first model, wherein the first accuracy is used for indicating accuracy of the first model in practical inference; and
re-training the first model or re-selecting a second model, by the first network element, in a case that the first accuracy meets a preset condition.

2. The method according to claim 1, wherein the first accuracy is used for indicating at least one of the following:
a degree of correctness of inference output of the first model in practical inference; and
a degree of incorrectness of inference output of the first model in practical inference.

3. The method according to claim 1, wherein the determining, by a first network element, a first accuracy of a first model comprises:
obtaining, by the first network element, first data; and determining, by the first network element, the first accuracy based on the first data; wherein
the first data comprise at least one of the following:
inference input data;
inference output data corresponding to the inference input data; and
label data corresponding to the inference input data.

4. The method according to claim 3, wherein the obtaining, by the first network element, first data comprises:
receiving use information, transmitted by a second network element, of the first model;
determining, source information of the first data according to the use information; and
obtaining the first data according to the source information.

5. The method according to claim 3, wherein the obtaining, by the first network element, first data comprises:
receiving the first data transmitted by a second network element, wherein the second network element comprises a model inference function network element.

6. The method according to claim 3, wherein the obtaining, by the first network element, first data comprises:
receiving the first data transmitted by a seventh network element, wherein the seventh network element comprises a data storage function network element.

7. The method according to claim 4, wherein before the receiving use information, transmitted by a second network element, of the first model, the method further comprises:
transmitting, by the first network element, a first request message to the second network element, wherein the first request message is used for requesting to obtain the use information for the first model of the second network element.

8. The method according to claim 5, wherein before the receiving the first data transmitted by a second network element, the method further comprises:
transmitting, by the first network element, a second request message to the second network element, wherein the second request message is used for requesting to obtain the first data collected by the second network element.

9. The method according to claim 6, wherein before the receiving the first data transmitted by a seventh network element, the method further comprises:
transmitting, by the first network element, a third request message to the seventh network element, wherein the third request message is used for obtaining the first data.

10. The method according to claim 4, wherein before the receiving use information, transmitted by a second network element, of the first model, the method further comprises:
obtaining the first model through training; and transmitting model information of the first model to the second network element; wherein
the model information of the first model comprises at least one of the following:
the first model; and
a second accuracy of the first model, wherein the second accuracy is used for indicating accuracy of a model output result presented by the first model in a training phase or a test phase.

11. The method according to claim 4, wherein the use information comprises at least one of the following:
a model identification information of the first model;
an analytic identification information of an inference task executed based on the first model;
condition limitation information of the inference task; and
target information of the inference task.

12. The method according to claim 11, wherein the source information comprises at least one of the following:
a third network element, wherein the third network element is configured to provide inference input data corresponding to the inference task; and
a fourth network element, wherein the fourth network element is configured to provide label data corresponding to the inference task.

13. The method according to claim 12, wherein the obtaining the first data according to the source information comprises at least one of the following:
transmitting an input data obtaining request message to the third network element, wherein the input data obtaining request message is used for requesting to obtain the inference input data; and
transmitting a label data obtaining request message to the fourth network element, wherein the label data obtaining request message is used for requesting to obtain the label data; wherein
the input data obtaining request message comprises at least one of the following:
type information of the inference input data;
target information corresponding to the inference input data; and
time information corresponding to the inference input data; and
the label data obtaining request message comprises at least one of the following:
type information of the label data;
target information corresponding to the label data; and
time information corresponding to the label data.

14. The method according to claim 3, wherein the determining, by a first network element, a first accuracy of a first model comprises:
inputting the inference input data into the first model, and determining the inference output data; and
determining the first accuracy according to the inference output data and the label data.

15. The method according to claim 1, wherein the first accuracy meeting the preset condition comprises at least one of the following that:
the first accuracy is less than a second accuracy, wherein the second accuracy is used for indicating accuracy of a model output result presented by the first model in a training phase or a test phase;
the first accuracy is less than the second accuracy, and a difference between the first accuracy and the second accuracy is greater than a preset value; and
the first accuracy is less than a preset accuracy.

16. The method according to claim 15, wherein the second accuracy is used for indicating at least one of the following:
a degree of correctness of the model output result presented by the first model in the training phase or the test phase; and
a degree of incorrectness of the model output result presented by the first model in the training phase or the test phase.

17. The method according to claim 1, wherein the re-training the first model by the first network element comprises:
obtaining target training data, wherein the target training data comprises target input data and target label data corresponding to the target input data; and
re-training the first model based on the target training data.

18. The method according to claim 17, wherein the obtaining target training data comprises at least one of the following:
obtaining first training data used when the first model is trained;
determining a fifth network element; obtaining second training data from the fifth network element, wherein the fifth network element is configured to provide training data; and
determining a sixth network element; and obtaining inference data from the sixth network element, wherein the sixth network element is configured to provide the inference data.

19. The method according to claim 18, wherein the determining a fifth network element comprises:
determining the fifth network element according to second information; wherein
the second information comprises an analytic identification information of an inference task executed based on the first model and/or condition limitation information of the inference task.

20. The method according to claim 19, wherein the determining a sixth network element comprises:
determining the sixth network element according to the second information.

21. The method according to claim 1, wherein after the re-training the first model or re-selecting a second model, by the first network element, the method further comprises at least one of the following:
transmitting model information of a second model obtained by re-training or the second model re-selected to a second network element, and executing, by the second network element, an inference task based on the second model; and
transmitting the model information of the second model obtained by re-training or the second model re-selected to a seventh network element, and storing, by the seventh network element, the model information of the second model; wherein
the model information of the second model comprises at least one of the following:
a model identification information of the second model;
an analytic identification information of the inference task executed based on the second model;
application range information of the second model;
a third accuracy of the second model, wherein the third accuracy is used for indicating accuracy of a model output result presented by the second model in a training phase or a test phase;
training data of the second model; and
the second model.

22. The method according to claim 21, wherein the third accuracy is used for indicating at least one of the following:
a degree of correctness of the model output result presented by the second model in the training phase or the test phase; and
a degree of incorrectness of the model output result presented by the second model in the training phase or the test phase.

23. The method according to claim 1, wherein
the first network element comprises a model training function network element;
a second network element comprises a model inference function network element;
a third network element comprises a source device of inference input data;
a fourth network element comprises a source device of label data;
a fifth network element comprises a source device of training data;
a sixth network element comprises a source device of inference data; and
a seventh network element comprises a data storage function network element.

24. A method for processing data in a communication network, comprising:
executing, by a second network element, an inference task based on a first model, wherein the first model is trained by a first network element, and the first network element comprises a model training function network element; and
transmitting at least one of use information of the first model and first data to the first network element, and/or transmitting first instruction information to a seventh network element, wherein the first instruction information is used for instructing the seventh network element to store first data of the inference task, and the seventh network element comprises a data storage function network element.

25. The method according to claim 24, wherein the first data comprise at least one of the following:
inference input data;
inference output data corresponding to the inference input data; and
label data corresponding to the inference input data.

26. The method according to claim 24, wherein before the transmitting the use information of the first model to the first network element, the method further comprises:
receiving, by the second network element, a first request message transmitted by the first network element, wherein the first request message is used for requesting to obtain the use information for the first model of the second network element.

27. The method according to claim 24, wherein before the transmitting the first data to the first network element, the method further comprises:
receiving, by the second network element, a second request message transmitted by the first network element, wherein the second request message is used for requesting to obtain the first data collected by the second network element.

28. The method according to claim 24, wherein before the transmitting the first data to the first network element, the method further comprises at least one of the following:
collecting, by the second network element, inference input data; and
collecting, by the second network element, label data corresponding to the inference input data.

29. The method according to claim 28, wherein the collecting, by the second network element, inference input data comprises at least one of the following:
collecting, by the second network element, the inference input data in a case of receiving a task request for the inference task from an eighth network element, wherein the eighth network element comprises a consumer network element; and
actively collecting, by the second network element, the inference input data.

30. The method according to claim 28, wherein the collecting, by the second network element, label data corresponding to the inference input data comprises:
transmitting, by the second network element, a data obtaining request to a fourth network element, wherein the data obtaining request is used for requesting to obtain the label data corresponding to the inference input data.

31. The method according to claim 24, further comprising:
receiving model information, transmitted by the first network element, of a second model, wherein the second model is obtained after the first network element re-trains the first model, or the second model is a model re-selected by the first network element; wherein
the model information of the second model comprises at least one of the following:
a model identification information of the second model;
an analytic identification information of the inference task executed based on the second model;
application range information of the second model;
a third accuracy of the second model, wherein the third accuracy is used for indicating accuracy of a model output result presented by the second model in a training phase or a test phase;
training data of the second model; and
the second model.

32. The method according to claim 31, wherein the third accuracy is used for indicating at least one of the following:
a degree of correctness of the model output result presented by the second model in the training phase or the test phase; and
a degree of incorrectness of the model output result presented by the second model in the training phase or the test phase.

33. The method according to claim 24, wherein before the executing, by a second network element, an inference task based on a first model, the method further comprises:
transmitting a model request message to the first network element, wherein the model request message is used for requesting to obtain the first model; and
receiving model information, transmitted by the first network element, of the first model; wherein
the model information of the first model comprises at least one of the following:
the first model; and
a second accuracy of the first model, wherein the second accuracy is used for indicating accuracy of a model output result presented by the first model in a training phase or a test phase.

34. The method according to claim 33, wherein the second accuracy is used for indicating at least one of the following:
a degree of correctness of the model output result presented by the first model in the training phase or the test phase; and
a degree of incorrectness of the model output result presented by the first model in the training phase or the test phase.

35. The method according to claim 24, wherein the executing, by a second network element, an inference task based on a first model comprises at least one of the following:
receiving a task request, transmitted by an eighth network element, for the inference task; and executing the inference task based on the first model, wherein the eighth network element comprises a consumer network element; and
obtaining a task request for the inference task triggered through simulation of the second network element; and executing the inference task based on the first model.

36. The method according to claim 34, wherein the executing the inference task based on the first model comprises:
transmitting an input data obtaining request message to a third network element, wherein the input data obtaining request message is used for requesting to obtain inference input data corresponding to the inference task;
receiving the inference input data transmitted by the third network element; and
inputting the inference input data into the first model, so as to obtain inference output data.

37. The method according to claim 35, wherein after the receiving a task request, transmitted by an eighth network element, for the inference task, and the executing the inference task based on the first model, the method further comprises:
transmitting inference output data to the eighth network element.

38. The method according to claim 24, wherein the use information comprises at least one of the following:
a model identification information of the first model;
an analytic identification information of the inference task executed based on the first model;
condition limitation information of the inference task; and
target information of the inference task.

39. An apparatus for processing data in a communication network, comprising:
a determination module, wherein the determination module is configured to determine a first accuracy of a first model, and the first accuracy is used for indicating accuracy of the first model in practical inference; and
a model training module, wherein the model training module is configured to re-train the first model or re-select a second model in a case that the first accuracy meets a preset condition.

40. The apparatus according to claim 39, wherein the first accuracy is used for indicating at least one of the following:
a degree of correctness of inference output of the first model in practical inference; and
a degree of incorrectness of inference output of the first model in practical inference.

41. The apparatus according to claim 39, wherein the determination module is configured to:
obtain first data; and determine the first accuracy based on the first data; wherein
the first data comprise at least one of the following:
inference input data;
inference output data corresponding to the inference input data; and
label data corresponding to the inference input data.

42. The apparatus according to claim 41, wherein the determination module is configured to:
receive use information, transmitted by a second network element, of the first model;
determine source information of the first data according to the use information; and
obtain the first data according to the source information; wherein
the use information comprises at least one of the following:
a model identification information of the first model;
an analytic identification information of an inference task executed based on the first model;
condition limitation information of the inference task; and
target information of the inference task; and
the source information comprises at least one of the following:
a third network element, wherein the third network element is configured to provide inference input data corresponding to the inference task; and
a fourth network element, wherein the fourth network element is configured to provide label data corresponding to the inference task.

43. The apparatus according to claim 41, wherein the determination module is configured to:
receive the first data transmitted by a second network element, wherein the second network element comprises a model inference function network element.

44. The apparatus according to claim 41, wherein the determination module is configured to:
receive the first data transmitted by a seventh network element, wherein the seventh network element comprises a data storage function network element.

45. The apparatus according to claim 42, wherein the determination module is further configured to:
transmit a first request message to the second network element, wherein the first request message is used for requesting to obtain the use information for the first model of the second network element.

46. The apparatus according to claim 43, wherein the determination module is further configured to:
transmit a second request message to the second network element, wherein the second request message is used for requesting to obtain the first data collected by the second network element.

47. The apparatus according to claim 44, wherein the determination module is further configured to:
transmit a third request message to the seventh network element, wherein the third request message is used for obtaining the first data.

48. The apparatus according to claim 42, wherein the model training module is further configured to:
obtain the first model through training; and transmit model information of the first model to the second network element; wherein
the model information of the first model comprises at least one of the following:
the first model; and
a second accuracy of the first model, wherein the second accuracy is used for indicating accuracy of a model output result presented by the first model in a training phase or a test phase.

49. The apparatus according to claim 42, wherein the determination module is configured to at least one of the following:
transmit an input data obtaining request message to the third network element, wherein the input data obtaining request message is used for requesting to obtain the inference input data; and
transmit a label data obtaining request message to the fourth network element, wherein the label data obtaining request message is used for requesting to obtain the label data; wherein
the input data obtaining request message comprises at least one of the following:
type information of the inference input data;
target information corresponding to the inference input data; and
time information corresponding to the inference input data; and
the label data obtaining request message comprises at least one of the following:
type information of the label data;
target information corresponding to the label data; and
time information corresponding to the label data.

50. The apparatus according to claim 41, wherein the determination module is configured to:
input the inference input data into the first model, and determine the inference output data; and
determine the first accuracy according to the inference output data and the label data.

51. The apparatus according to claim 39, wherein the model training module is configured to:
obtain target training data, wherein the target training data comprises target input data and target label data corresponding to the target input data; and
re-train the first model based on the target training data.

52. The apparatus according to claim 51, wherein the model training module is configured to at least one of the following:
obtain first training data used when the first model is trained;
determine a fifth network element; obtain second training data from the fifth network element, wherein the fifth network element is configured to provide training data; and
determine a sixth network element; and obtain inference data from the sixth network element, wherein the sixth network element is configured to provide the inference data.

53. The apparatus according to claim 52, wherein the model training module is further configured to:
determine the fifth network element according to second information; wherein
the second information comprises an analytic identification information of an inference task executed based on the first model and/or condition limitation information of the inference task.

54. The apparatus according to claim 53, wherein the model training module is further configured to:
determine the sixth network element according to the second information.

55. The apparatus according to claim 39, wherein the model training module is further configured to at least one of the following:
transmit model information of a second model obtained by re-training or the second model re-selected to a second network element, and execute, by the second network element, an inference task based on the second model; and
transmit the model information of the second model obtaining by re-training or the second model re-selected to a seventh network element, and store, by the seventh network element, the model information of the second model; wherein
the model information of the second model comprises at least one of the following:
a model identification information of the second model;
an analytic identification information of the inference task executed based on the second model;
application range information of the second model;
a third accuracy of the second model, wherein the third accuracy is used for indicating accuracy of a model output result presented by the second model in a training phase or a test phase;
training data of the second model; and
the second model.

56. An apparatus for processing data in a communication network, comprising:
a task execution module, wherein the task execution module is configured to execute an inference task based on a first model, the first model is trained by a first network element, and the first network element comprises a model training function network element; and
a transmission module, wherein the transmission module is configured to transmit at least one of use information of the first model and first data to the first network element, and/or transmit first instruction information to a seventh network element, wherein the first instruction information is used for instructing the seventh network element to store first data of the inference task, and the seventh network element comprises a data storage function network element.

57. The apparatus according to claim 56, further comprising: a first reception module, wherein the first reception module is configured to:
receive a first request message transmitted by the first network element, wherein the first request message is used for requesting to obtain the use information for the first model of a second network element.

58. The apparatus according to claim 56, further comprising: a second reception module, wherein the second reception module is configured to:
receive a second request message transmitted by the first network element, wherein the second request message is used for requesting to obtain the first data collected by a second network element.

59. The apparatus according to claim 56, further comprising: a collection module, wherein the collection module is configured to at least one of the following:
collect inference input data; and
collect label data corresponding to the inference input data.

60. The apparatus according to claim 59, wherein the collection module is further configured to at least one of the following:
collect the inference input data in a case of receiving a task request for the inference task from an eighth network element, wherein the eighth network element comprises a consumer network element; and
actively collect the inference input data.

61. The apparatus according to claim 59, wherein the collection module is further configured to:
transmit, by a second network element, a data obtaining request to a fourth network element, wherein the data obtaining request is used for requesting to obtain the label data corresponding to the inference input data.

62. The apparatus according to claim 56, wherein the task execution module is further configured to:
receive model information, transmitted by the first network element, of a second model, wherein the second model is obtained after the first network element re-trains the first model; wherein
the model information of the second model comprises at least one of the following:
a model identification information of the second model;
an analytic identification information of the inference task executed based on the second model;
application range information of the second model;
a third accuracy of the second model, wherein the third accuracy is used for indicating accuracy of a model output result presented by the second model in a training phase or a test phase;
training data of the second model; and
the second model.

63. The apparatus according to claim 56, wherein the task execution module is further configured to:
transmit a model request message to the first network element, wherein the model request message is used for requesting to obtain the first model; and
receive model information, transmitted by the first network element, of the first model; wherein
the model information of the first model comprises at least one of the following:
the first model; and
a second accuracy of the first model, wherein the second accuracy is used for indicating accuracy of a model output result presented by the first model in a training phase or a test phase.

64. A network side device, comprising a processor and a memory, wherein a program or instruction executable on the processor is stored in the memory, and when the program or instruction is executed by the processor, steps of the method according to any one of claims 1-23 are implemented, or steps of the method according to any one of claims 24-38 are implemented.

65. A readable storage medium, storing a program or instruction, wherein when the program or instruction is executed by a processor, steps of the method according to any one of claims 1-23 are implemented, or steps of the method according to any one of claims 24-38 are implemented.
